# EUROPÄISCHE PATENTSCHRIFT

(11) **EP 0 931 114 B1**
(45) Veröffentlichungstag und Bekanntmachung des Hinweises auf die Patenterteilung: **11.07.2001**
(21) Anmeldenummer: 98920503.4
(22) Anmeldetag: 02.04.1998
(51) Int. Cl.: C09D 175/16, C09D 175/04

(54) **DISPERSIONEN ENTHALTEND EIN POLYURETHAN UND EIN STRAHLENHÄRTBARES PRÄPOLYMER**
DISPERSIONS CONTAINING A POLYURETHANE AND A RADIATION-HARDENABLE PREPOLYMER
DISPERSIONS CONTENANT UN POLYURETHANE ET UN PREPOLYMERE DURCISSABLE PAR RAYONNEMENT

(30) Priorität: 17.04.1997 DE 19716020
(43) Veröffentlichungstag der Anmeldung: 28.07.1999
(73) Patentinhaber: BASF AKTIENGESELLSCHAFT, 67056 Ludwigshafen (DE)
(72) Erfinder: KOKEL, Nicolas, D-67069 Ludwigshafen (DE); MENZEL, Klaus, D-71696 Möglingen (DE); REICH, Wolfgang, D-67133 Maxdorf (DE)
(86) Internationale Anmeldenummer: EP9801943
(87) Internationale Veröffentlichungsnummer: WO9847975

(56) Entgegenhaltungen:
- DE-A- 4 031 732
- DE-C- 4 344 063

## Beschreibung

Die vorliegende Erfindung betrifft wässerige Dispersionen, welche Schutzkolloide oder Emulgatoren in Mengen von weniger als 10 Gew-%, bezogen auf das Präpolymer (B), beinhalten und in dispergierter Form
A. ein Polyurethan (A) enthaltend hydrophile Gruppen, die die Wasserdispergierbarkeit des Polyurethans bewirken, wobei dieses Polyurethan (A) im wesentlichen frei ist von C-C-Doppelbindungen und
B. ein Präpolymer mit einem Gehalt von 0,1 bis 1 mol radikalisch polymerisierbarer C-C-Doppelbindungen pro 100 g Präpolymer enthalten.

Weiterhin betrifft die Erfindung Verfahren zu deren Herstellung sowie deren Verwendung zur Beschichtung von Gegenständen.

Wässerige Dispersionen, mit denen Gegenständen eine Oberfläche verliehen werden kann, die widerstandsfähig ist gegen mechanische Beanspruchung und Angriffen durch Lösungsmittel standhält, indem man diese Gegenstände mit der Dispersion beschichtet und die Beschichtung anschließend durch Bestrahlung mit Licht härtet, sind allgemein bekannt.

In der DE-A-4031732 werden hierfür wässerige Dispersionsmischungen empfohlen, wobei es sich bei einer Mischungskomponente um eine Dispersion eines Polyurethans mit hydrophilen Gruppen handelt, die die Dispergierbarkeit des Polyurethans auch in Abwesenheit von Dispergierhilfsmitteln erlauben. Bei der anderen Dispersion handelt es sich um ein dispergiertes Präpolymer mit radikalisch polymerisierbaren C-C-Doppelbindungen, wobei dieses Präpolymer selbstdispergierbar ist oder mit Hilfe von Emulgatoren oder Schutzkolloiden dispergiert wird.

Aus der DE-A-4228713 sind strahlenhärtbare Bindemittel bekannt. Zu deren Herstellung wird empfohlen, eine Mischung aus einem Polyurethan, das anionische Gruppen und als radikalisch polymerisierbare Doppelbindungen (Meth)acryloylgruppen trägt, und einem strahlenhärtbaren (Meth)acrylatgruppen enthaltendem Bindemittel in Wasser zu dispergieren. Das Polyurethan dient hierbei als Emulgator.

Die DE-A-3900257 beschreibt Mischungen aus mit hydrophilen Gruppen und radikalisch polymerisierbaren Doppelbindungen modifizierten Polyurethanen und radikalisch härtbaren Kunstharzen (z.B. (Meth)acryloylgruppen aufweisende Polyurethane), und deren Dispergierung in Wasser.

Diese vorbekannten wässerigen strahlenhärtbaren Dispersionen weisen jedoch eine mangelhafte Lagerstabilität auf oder die Eigenschaften bestrahlter oder unbestrahlter Beschichtungen, die aus diesen Dispersionen hergestellt sind, sind, was Eigenschaften wie Härte, Chemikalienbeständigkeit, Flexibilität, Haftung auf dem Untergrund, Schleifbarkeit und Beschaffenheit der Oberfläche angeht, noch verbesserungsbedürftig, insbesondere dann, wenn sie mit anderen Polymerdispersionen, beispielsweise Styrol-Acrylat- oder Styrol-Butadien-Dispersionen verschnitten werden.

Die Eigenschaften der unbestrahlten Beschichtungen sind ebenfalls von Bedeutung, da an Gegenständen mit komplexer Geometrie nicht alle Stellen von der die Härtung der Beschichtung bewirkenden Strahlung in ausreichendem Umfang erreicht werden. Zwar können die mechanischen Eigenschaften der unbestrahlten Beschichtungen. nicht das hohe Niveau der bestrahlten vollkommen erreichen, jedoch sollen die unbestrahlten zumindest staubtrocken und grifffest sein. Auch im Hinblick darauf sind die bekannten Dispersionen noch verbesserungsbedürftig.

Die vorliegende Aufgabe bestand deshalb darin, den vorstehend beschriebenen Mängeln abzuhelfen.

Demgemäß wurden die eingangs definierten wässerigen Dispersionen gefunden.

Die Polyurethankomponente (Polyurethan A) der molekularen Mischung ist bevorzugt aufgebaut aus
a) Diisocyanate mit 4 bis 30 C-Atomen,
b) Diolen, von denen
   b1) 10 bis 100 mol-%, bezogen auf die Gesamtmenge der Diole (b), ein Molekulargewicht von 500 bis 5000 aufweisen, und
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

Als Monomere (a) kommen die üblicherweise in der Polyurethanchemie eingesetzten aliphatischen oder aromatischen Diisocyanate in Betracht. Bevorzugt sind die Monomere (a) oder deren Mischungen, die auch als Monomere (a) in der DE-A-19521500 erwähnt sind.

Als Monomere (b) und (d) kommen bevorzugt die in der DE-A-19521500 als Monomere (b) und (d) genannten in Betracht.

Um die Wasserdispergierbarkeit der Polyurethane zu erreichen, sind die Polyurethane neben den Komponenten (a), (b) und (d) aus von den Komponenten (a), (b) und (d) verschiedenen Monomere (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Bevorzugte Monomere ( c) sind ebenfalls die in der DE-A-19521500 als Monomere ( c) bezeichneten.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 80 bis 1200, bevorzugt 140 bis 1000 und besonders bevorzugt 200 bis 800 mmol/kg beträgt.

Bei den (potentiell) hydrophilen Gruppen kann es sich um nichtionische oder bevorzugt um (potentiell) ionische hydrophile Gruppen handeln. Bevorzugt wird ohne wirksame Mengen an nichtionische Gruppen gearbeitet.

Der Gehalt an nichtionischen hydrophilen Gruppen, falls solche eingebaut werden, beträgt im allgemeinen bis 5, bevorzugt bis 3, besonders bevorzugt bis 1 Gew.-%, bezogen auf die Gewichtsmenge aller Monomere (a) bis (e).

Monomere (e), die gegebenenfalls mitverwendet werden, sind Monoisocyanate, Monoalkohole und mono-primäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie Carbonylgruppen und dienen zur Einführung von funktionellen Gruppen in das Polyurethan, die die Dispergierung bzw. die Vernetzung oder weitere polymeranaloge Umsetzung des Polyurethans ermöglichen.

Monomere, die mindestens eine Isocyanatgruppe oder mindestens eine Gruppe enthalten, die mit Isocyanatgruppen in einer Additions- oder Kondensationsreaktion reagieren kann und daneben C-C-Doppelbindungen, werden gar nicht oder nur in unwesentlichen Mengen eingesetzt, d.h. nur in solchen Mengen, daß die Eigenschaften des Endproduktes davon nicht beeinflußt werden.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
   0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Weiterhin wird der Anteil der Monomere (a) bevorzugt so gewählt, daß der Anteil der Monomere (a) an den Monomeren (a) bis (e) 20 bis 70 Gew.-% beträgt.

Die eingesetzten Monomere (a) bis (e) tragen im arithmetischen Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomere beeinflußt wird.

Zur Beschleunigung der Reaktion der Isocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel oder die sonst üblichen Polymerisationsapparate in Betracht.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Die beauspruchlen Dispersionen können dadurch hergestellt werden, daß man in einem Schritt I eine Schmelze oder Lösung herstellt, die das Präpolymer (B) und das Polyurethan (A) oder dessen Präpolymer enthält und die so erhaltene Schmelze oder Lösung in einem Schritt II in Wasser dispergiert.

Meistens werden die Dispersionen nach einem der folgenden Verfahren hergestellt:

Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanat-gruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Auch auf die Mitverwendung von üblichen Dispergierhilfsmitteln, also Emulgatoren oder Schutzkolloiden in wirksamen Mengen wird verzichtet. Falls überhaupt solche Dispergierhilfsmittel mitverwendet werden, liegen die Mengen bei weniger als 10, bevorzugt weniger als 5, besonders bevorzugt weniger als 3 Gew.-%, bezogen auf die Präpolymere (B).

Als Präpolymere (B) eigenen sich beispielsweise solche, die in der DE-A-4031732 und dort als Komponente (B) bezeichnet sind oder der DE-A-19602071 erwähnt sind, wobei allerdings solche, die selbstemulgierbar sind, ausgenommen sind. Das bedeutet, daß sie im wesentlichen frei sind von hydrophilen Gruppen wie ionischen Gruppen oder nichtionischen hydrophilen Gruppen wie Polyethylenoxideinheiten.

Bei den Präpolymeren (B) wird die Polymer-Hauptkette durch Ester-Ether- oder Urethan-Wiederholungseinheiten gebildet. Sie enthalten im allgemeinen 0,1 bis 1, bevorzugt 0,1 bis 0,5 mol radikalisch polymerisierbare Doppelbindungen pro 100 g Präpolymer (B), wobei Methacryloyl- oder Acryloylgruppen besonders bevorzugt sind.

Die Präpolymere (B) weisen im allgemeinen ein zahlenmittleres Molekulargewicht von 300 bis 10000, bevorzugt 300 bis 3000, besonders bevorzugt 300 bis 1500 auf. Die Molekulargewichte lassen sich beispielsweise durch Gelpermeationschromatographie (GPC) gegen einen Polystyrolstandard ermitteln.

Die Präpolymere (B) werden lösungsmittelfrei oder mit einem Lösungsmittelanteil von weniger als 30 Gew.% eingesetzt.

Das Gewichtsverhältnis Polyurethan (A) zu Präpolymer (B) beträgt zweckmäßigerweise 0,3 : 1 bis 99: 1, bevorzugt 1 : 1 bis 99 : 1, besonders bevorzugt 2 : 1 bis 20 : 1.

Bevorzugt wird das Präpolymer dem Polyurethan (A) bzw. dessen Präpolymer vor der Dispergierung zugegeben. Es ist jedoch gleichfalls möglich, zunächst eine wässerige Dispersion eines Polyurethans (A) herzustellen und diese anschließend, zu einem beliebigen Zeitpunkt vor der Verwendung der Dispersion mit dem Präpolymer (B) zu vermischen, z.B. indem man das Präpolymer (B) in die wässerige Dispersion einrührt.

Es wird vermutet, daß das Polyurethan (A) und das Präpolymer (B) in der Dispersion in Form einer molekularen Mischung vorliegt und nicht in Form einer Dispersion, die in einer diskontinuierlichen Phase nur das Polyurethan (A) und in einer weiteren diskontinuierlichen Phase das Präpolymer (B) enthält.

Die Dispersionen haben im allgemeinen einen Feststoffgehalt von 20 bis 70, bevorzugt von 25 bis 60, besonders bevorzugt von 35 bis 45 Gew.-%. Ihre Viskosität beträgt üblicherweise 10 bis 1000 mPas, gemessen bei 23 °C und einer Schergeschwindigkeit von 250 s⁻¹.

Die Dispersionen enthalten im allgemeinen weniger als 10 Gew.-% Lösungsmittel und sind bevorzugt praktisch lösemittelfrei.

Die erfindungsgemäßen Dispersionen können handelsübliche Hilfs- und Zusatzstoffe wie Netzmittel, Entschäumer, Mattierungsmittel, Emulgatoren, Fotoinitiatoren, Verdickungsmittel und Thixotropiermittel, Farbmittel wie Farbstoffe und Pigmente enthalten.

Weiterhin können diese Dispersionen mit anderen wässerigen Polymerdispersionen abgemischt werden, wobei der Feststoffanteil dieser Dispersion, bezogen auf den Feststoffanteil der erfindungsgemäßen Dispersionen, 1 : 10 bis 10 : 1 beträgt.

Bei diesen Abmischdispersionen handelt es sich beispielsweise um allgemein bekannte Dispersionen von Copolymeren aus Olefinen, Methacrylaten oder Acrylaten wie Styrol-Butadien- oder Styrol-Acrylat-Copolymeren oder eine übliche Polyurethandispersion.

Die erfindungsgemäßen Dispersionen eignen sich zur Herstellung von Beschichtungen auf Gegenständen aus Holz, Papier, Textil, Metall oder Kunststoff, wobei ein Film der Dispersionen auf die gegenstände aufgetragen, ggf. getrocknet, und auschließend belichtet wird.

### Beispiele

Abkürzungen
RT = Raumtemperatur
MG = Molekulargewicht
T1.=Teile
VE-Wasser = entiontes Wasser

### A. Herstellung der Dispersionen

### Dispersion 1:

400 T1. Polyesterdiol von MG 2000 (aus Adipinsäure und Isophthalsäure im Molverhältnis 1:1 und Hexandiol-1,6), 89,9 T1. Dimethylolpropionsäure, 117,9 T1. Ethylenglykol und 499,8 T1. eines Isomerengemisches des Toluylendiisocyanats (etwa 80 % 2,4- und 20 % 2,6-Isomer) wurden 4 h bei 90°C in 550 T1. Methylethylketon umgesetzt. Danach wurden 0,4 T1. Dibutylzinndilaurat, 0,5 T1. Dimethylhydrochinon und 374 T1. Laromer® LR 8945 (Polyether-Acrylat-Harz mit ca. 5,6 mol C-C-Doppelbindungen pro kg der Fa. BASF AG) in die Polyurethan-Lösung eingearbeitet und weitere 2h bei 90°C umgesetzt. Die Prepolymer-Lösung wurde durch Zugabe von 550 T1. Aceton verdünnt und abgekühlt. Der Isocyanatgehalt betrug 0,14 Gew.-%. Bei 30°C wurden 53,6 Tl. einer 50 %-igen, wäßrigen Natronlaugenlösung zugegeben. Zur Dispergierung wurden 2400 T1. VE-Wasser addiert. Nach der Lösemittel-Entfernung entstand eine durchscheinende, fast klare und leicht gelbliche Dispersion mit einem Festanteil von 36,5 %, einem pH-Wert von 8,0 und einer Auslaufzeit von 115 Sek.

### Dispersionen 2 bis 5:

Dispersionen 2 bis 5 wurden analog zu Dispersion 1, wie in Tabelle 1 angegeben, mit unterschiedlichen Mengen an Laromer LR 8945 hergestellt.

### Dispersion 6:

Dispersion 6 stellt eine Verfahrensvariante von Dispersion 3 und 4 dar, wobei nach der ersten Umsetzungsstufe mit dem Aceton verdünnt und erst danach das Laromer LR 8945 addiert wurde. Dibutylzinndilaurat und Dimethylhydrochinon wurden nicht hinzugefügt.

### Dispersion 7:

Dispersion 7 stellt eine Verfahrensvariante von Dispersion 6 dar, wobei an Stelle von Methylethylketon Aceton als Lösemittel für die erste Umsetzungsstufe verwendet wurde. Dabei wurde unter Eigendruck in einem Metallkessel gearbeitet.

### Dispersion 8:

400 T1. Polyesterdiol von MG 2000 (aus Adipinsäure und Isophthalsäure im Molverhältnis 1:1 und Hexandiol-1,6), 62,4 Tl. Dimethylolpropionsäure, 72,1 Tl. Butandiol-1,4 und 356,8 T1. Isophorondiisocyanat wurden 3h bei 90°C in 50 Tl. Methylethylketon umgesetzt. Die Prepolymer-Lösung wurde durch Zugabe von 500 Tl. Aceton verdünnt und abgekühlt. Der Isocyanatgehalt betrug 0,86 Gew.-%. Anschließend wurden in der Reihenfolge bei 30°C 469 Tl. Laromer LR 8945, 33,2 Tl. N,N-Dimethyl-ethanolamin, 1400 T1. VE-Wasser und 9,6 Tl. Diethylentriamin (in 50 Tl. VE-Wasser gelöst) zugemischt.

### Dispersion 9:

Dispersion 9 wurde analog zu Dispersion 8 aus folgenden Edukten hergestellt: 400 Tl. Polyester, 67,1 Tl. DMPA, 144,2 Tl. Butandiol-1,4, 551,3 Tl. Isophorondiisocyanat, 300 Tl. Laromer LR 8945, 32 Tl. einer 50%-igen, wäßrigen Natronlauge-Lösung und 12,4 Tl. Diethylentriamin (in 50 Tl. VE-Wasser gelöst).

### B. Herstellung der Lacke

Die Dispersionen wurden auf ihre Eignung für die Anwendung UV-Lackierung untersucht. Es wurden jeweils 3 Gew.-% vom Photoinitiator Irgacure® 500 (Fa. Ciba-Geigy) bezogen auf Feststoff in die Dispersion eingearbeitet.

### B.1 Lacke auf Glasplatte

Aus den Dispersionen wurde mit Hilfe einer 200 µm-Spaltrackel ein Film auf eine Glasplatte aufgetragen. Der Film wurde etwa 5 bis 10 min bei Raumtemperatur getrocknet. Anschließend wurde der Film bei 60°C für 2 bis 20 min im Trockenschrank behandelt.

Die auf diese Weise physikalisch getrockneten Filme wurden mit einer Dosis nach Wellenlängen aufgeteilt, von ca. 550 mJ/cm² (320-390 nm), 484 mJ/cm² (280-320nm), 50 mJ/cm² (250-260 nm), 240 mJ/cm² (395-445 nm) mittels eines Quecksilber-Mitteldruckstrahler (120 Watt/cm) belichtet.

Die Prüfergebnissen sind in Tab. 2 dargestellt.

### B.2 Lacke auf Holz

Die in Tabelle 3 angegebenen Dispersionen und Hilfsmittel wurden vermischt. Die Mischung wurde auf Holz mit einer SATA-Jet Fließbecherpistole mit einer Düse von 1,3 bzw. 1,6 mm appliziert. Der Arbeitsdruck betrug etwa 2 bis 2,5 bar. Es wurden jeweils zwei Schichten von ca. 10 bis 40 g/m² aufgebracht. Zwischen der ersten und der zweiten Schicht wurde der Film (2 min bei 45°C mit Umluft- und 2 min bei 60°C mit Düsentrockner) getrocknet und anschließend unter den gleichen Bedingungen, wie bei B.1 beschrieben, belichtet. Vor Applikation der zweiten Schicht wurde zwischengeschliffen (Körnung ca. 240). Die zweite Schicht wurde entsprechend der ersten getrocknet und belichtet.

Die Prüfergebnissen sind in Tab. 3 dargestellt.

### C. Prüfmethoden

### Oberflächenhärte

Die Oberflächenhärte wurde nach DIN 53157 mit einem König-Gerät bestimmt. In den Tabellen ist die Anzahl der Doppelhülse (DH) wiedergegeben.

### Erichsen-Tiefung

Die Prüfung erfolgte nach ISO 1520.

### Haftungsprüfung

Die Haftungsprüfung erfolgte mit einem Gitterschnittgerät nach DIN-EN-ISO 2409.

### Chemikalienbeständigkeit

Die Chemikalienbeständigkeit wurde in Anlehnung an die DIN 68 861 durchgeführt. Aus dem Gesamtpaket wurden jedoch nur 10 Prüfmittel ausgewählt und Beanspruchungsgruppe 1b entsprechend aufgelegt. Im einzelnen handelte es sich bei den Prüfmitteln um Natriumcarbonat, Rotwein, Pulverkaffee, Johannisbeersaft, Ethyl-butylacetal, Senf, Lippenstift, Desinfektionsmittel, Kugelschreiberpaste und Reinigungsmittel (0 = beste Bewertung).

### Glanzgrad

Die Bestimmung des Glanzgrades erfolgte nach DIN 67 530 bei 60° Einfall/Ausfall-Winkel.

### Lagerstabilität

Die Proben wurden bis zu 3 Monaten bei RT und 60°C gelagert und in regelmäßigen Abständen von 7 Tagen überprüft. Hierzu wurden die Proben mit einer Rakel auf eine Glasplatte aufgetragen und der Film auf Trübung und Stippenbildung hin beurteilt. Weiterhin wurde geprüft, ob die Viskosität konstant blieb. In der Tabelle 1 ist angegeben, bis zu wieviel Wochen die Viskosität konstant und die Dispersion frei von Stippen blieb.

### Verträglichkeit

Die Dispersionen wurden im Verhältnis 2 : 1, bezogen auf den Feststoffgehalt, mit folgenden Dispersionen (Verkaufsprodukte der BASF AG) abgemischt und auf ihre Lagerstabilität (Methoden wie unter "Lagerstabilität" beschrieben) geprüft und daraufhin geprüft, ob die getrockneten Filme frei von Störstellen waren:
- Acronal® 290 D (Styrol-Acrylat-Dispersion)
- Luhydran® LR 848 S (Acrylatdispersion)
- Styronal® 8736 X (Styrol-Butadien-Dispersion)

### Viskosität

Die Bestimmung der Auslaufzeit in Sekunden erfolgte nach DIN 53 211 mit einem DIN 4-Becher.

### Aussehen

Die Dispersionen wurden auf Glasplatten aufgerakelt und visuell auf das Vorhandensein von Störstellen wie Stippen und Krater untersucht. Waren keine vorhanden, so wurden die Dispersionen mit "in Ordnung" (i.O.) beurteilt.

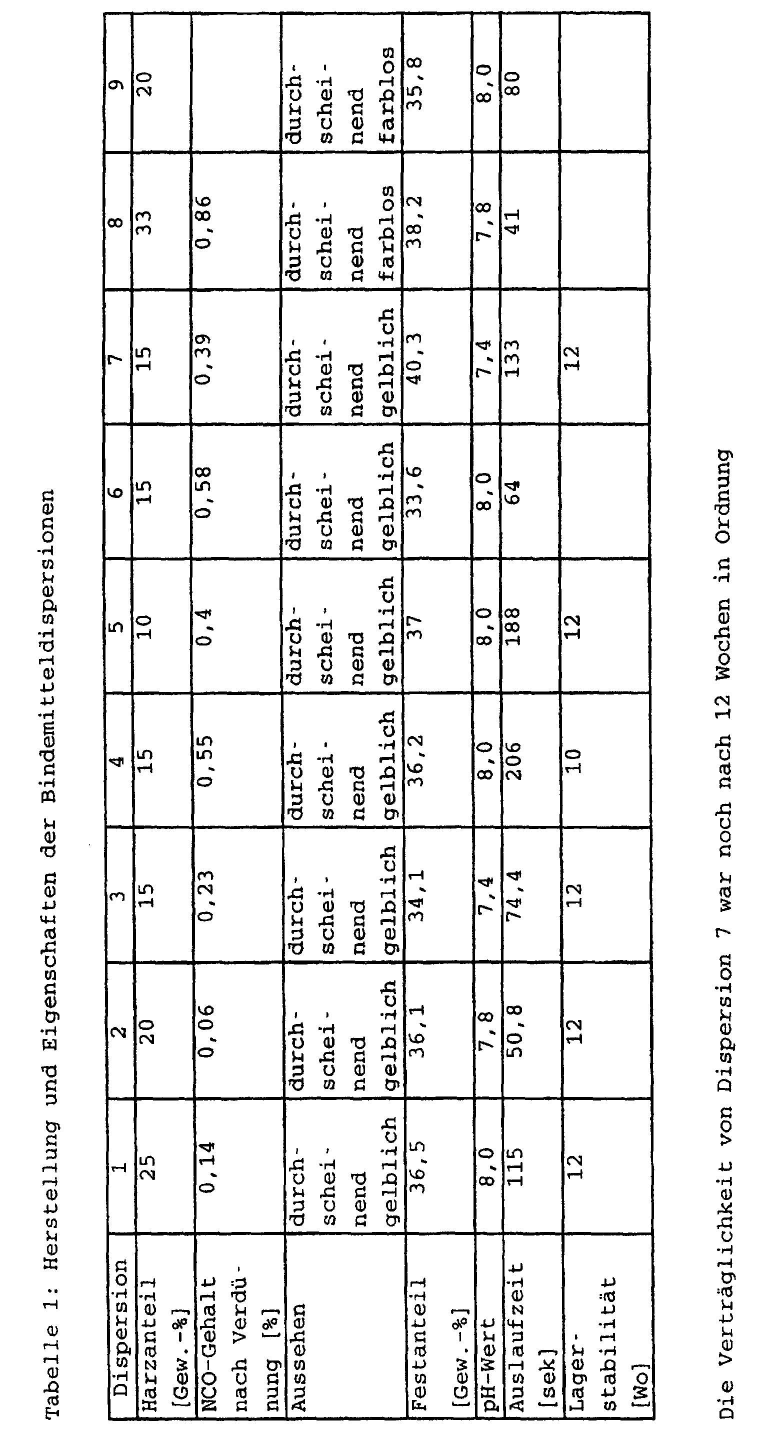

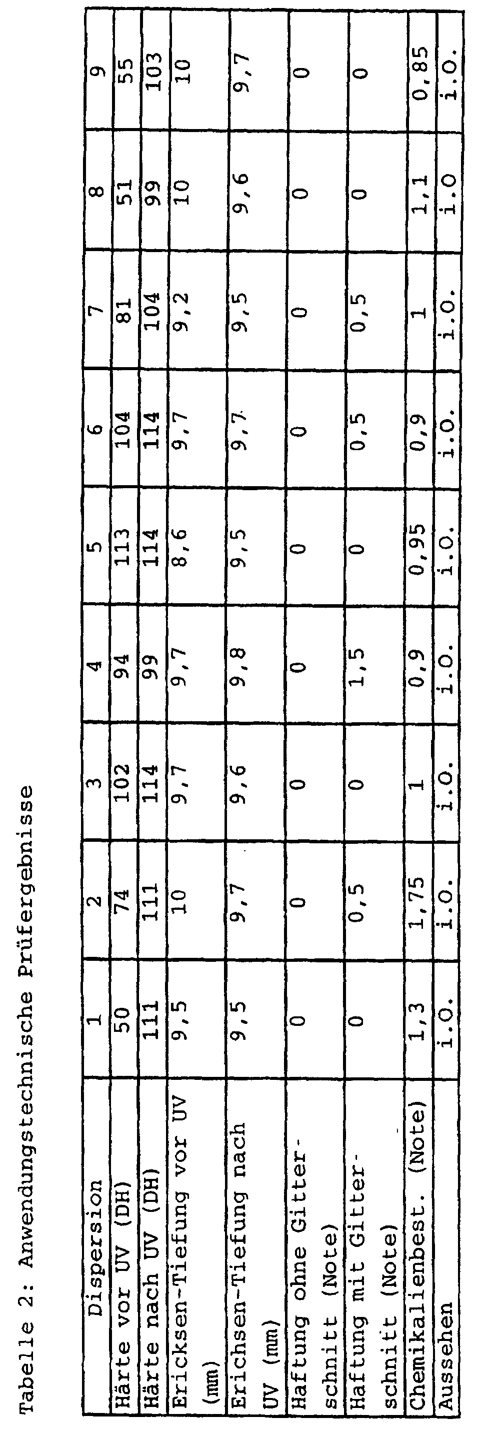

**Tabelle 3:**

| Herstellung und Prüfung von Mattlacken | | |
|---|---|---|
| Teile Dispersion 4 | 74,2 | - |
| Teile Dispersion 6 | - | 79,0 |
| Teile Dehydran® 1293* | 0,1 | 0,1 |
| Teile Acematt® TS 100** | 2,5 | 2,5 |
| Teile Irgacure® 184***(50 %ig in Butyldiglykol) | 1,6 | 1,6 |
| VE-Wasser | 21,6 | 21,6 |
| Summe | 100 | 100 |
| Festanteil Mattlack [Gew.-%] | 29,4 | 30,1 |
| Auslaufzeit Mattlack [sek] | 21 | 21 |
| Glanz vor UV [%] | 12,0 | 10,5 |
| Glanz nach UV [%] | 13,6 | 10,0 |
| Chemikalienbest. vor UV [Note] | 1,3 | 1,5 |
| Chemikalienbest. nach UV [Note] | 0,8 | 0,9 |
| Schleifbarkeit vor UV | gut | gut |
| Schleifbarkeit nach UV | gut | gut |

| | | |
|---|---|---|
| * Entschäumer der Fa. Henkel; | | |
| ** Mattierungsmittel der Fa. Degussa; | | |
| *** Photoinitiator der Fa. Ciba-Geigy; | | |

## Patentansprüche

1. Wässerige Dispersionen, welche weniger als, 10 Gew-%, bezogen auf Komponente (B), an Schutzkolloiden oder Emulgatoren dispergierter Form
A. ein Polyurethan (A) enthaltend hydrophile Gruppen, die die Wasserdispergierbarkeit des Polyurethans bewirken, wobei dieses Polyurethan (A) im wesentlichen frei ist von C-C-Doppelbindungen und
B. ein nicht-selbstdispergierbares Präpolymer mit einem Gehalt von 0,1 bis 1 mol radikalisch polymerisierbarer C-C-Doppelbindungen pro 100 g Präpolymer, enthalten.

2. Wässerige Dispersionen nach Anspruch 1, wobei das Gewichtsverhältnis Polyurethan (A) zu Präpolymer (B) 0,3 : 1 bis 99 : 1 beträgt.

3. Wässerige Dispersionen nach Anspruch 1 oder 2, wobei das Polyurethan (A) aufgebaut ist aus
a) Diisocyanaten mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppen oder eine Isocyanatgruppe handelt.

4. Wässerige Dispersionen nach Anspruch 3, wobei der Anteil der Monomere (a) an den Monomeren (a) bis (e) 20 bis 70 Gew.-% beträgt.

5. Wässerige Dispersionen nach den Ansprüchen 1 bis 4, wobei deren Viskosität, gemessen bei 23 °C und einer Schergeschwindigkeit von 250 s⁻¹, 10 bis 1000 mPas beträgt.

6. Verfahren zur Herstellung von wässerigen Dispersionen nach den Ansprüchen 1 bis 5, dadurch gekennzeichnet, daß man
Ia. In Schritt Ia eine Schmelze oder Lösung herstellt, die das Präpolymer (B) und das Polyurethan (A) oder dessen Präpolymer enthält,
IIa. die in Schritt Ia hergestellte Schmelze oder Lösung in Wasser dispergiert.

7. Verfahren nach Anspruch 6, dadurch gekennzeichnet, daß man das Polyurethanpräpolymer während oder im Anschluß an die Dispergierung zum Polyurethan umsetzt.

8. Verfahren zur Beschichtung von Gegenständen aus Holz, Papier, Textil, Metall oder Kunststoff, dadurch gekennzeichnet, daß man,
Ib. einen Film der Dispersionen nach den Ansprüchen 1 bis 5 auf die genannten Gegenstände aufträgt und
IIb.den in Schritt Ib hergestellten Film belichtet.

9. Verfahren nach Anspruch 8, dadurch gekennzeichnet, daß man den gemäß Schritt Ib hergestellten Film vor dem Verfahrensschritt IIb trocknet.

10. Gegenstände aus Holz, Papier, Textil, Metall oder Kunststoff, die nach dem Verfahren nach Anspruch 8 oder 9 beschichtet wurden.

## Revendications

1. Dispersions aqueuses, qui contiennent moins de 10% en poids de colloïdes protecteurs ou d'émulsifiants, par rapport au composant (B), ainsi que sous forme dispersée
A. un polyuréthanne(A) contenant des groupes hydrophiles, qui produisent la dispersibilité du polyuréthanne dans l'eau, ce polyuréthanne (A) étant essentiellement exempt de doubles liaisons C=C et
B. un prépolymère non autodispersible ayant une teneur de 0,1 à 1 mole de doubles liaisons C=C polymérisables par voie radicalaire, pour 100 g de prépolymère.

2. Dispersions aqueuses selon la revendication 1, dans lesquelles le rapport pondéral du polyuréthanne (A) au prépolymère (B) est de 0,3:1 à 99:1.

3. Dispersions aqueuses selon la revendication 1 ou 2, dans lesquelles le polyuréthanne (A) est construit à partir
a) de diisocyanates ayant 4 à 30 atomes de C,
b) de diols, dont
b1) 10 à 100% en moles, par rapport à la quantité totale des diols (b), présentent une masse moléculaire de 500 à 5 000, et
b2) 0 à 90% en moles, par rapport à la quantité totale des diols (b), présentent une masse moléculaire de 60 à 500 g/mole,
c) de monomères différents des monomères (a) et (b), ayant au moins un groupe isocyanate ou au moins un groupe réactif envers les groupes isocyanates, qui portent de surcroît, au moins un groupe hydrophile ou un groupe potentiellement hydrophile, qui produisent la dispersibilité des polyuréthannes dans de l'eau,
d) éventuellement d'autres composés polyvalents différents des monomères (a) à (c) ayant des groupes réactifs, ou il s'agit de groupes hydroxyles alcooliques, groupes amines primaires ou secondaires ou des groupes isocyanates et
e) éventuellement des composés monovalents différents des monomères (a) à (d) ayant un groupe réactif ou il s'agit d'un groupe hydroxyle alcoolique, d'un groupe amine primaire ou secondaire ou d'un groupe isocyanate.

4. Dispersions aqueuses selon la revendication 3, où la proportion des monomères (a) par rapport aux monomères (a) à (e) est de 20 à 70%.

5. Dispersions aqueuses selon les revendications 1 à 4, dont la viscosité, mesurée à 23°C est à une vitesse de cisaillement de 250 s⁻¹ est de 10 à 1 000 mPa.s.

6. Procédé de préparation de dispersions aqueuses selon les revendications 1 à 5, caractérisé en ce que
Ia. l'on prépare dans l'étape la une masse fondue ou une solution, qui contient le prépolymère (B) et le polyuréthanne (A) ou son prépolymère,
IIa. l'on disperse la masse fondue ou la solution préparée dans l'étape Ia dans de l'eau.

7. Procédé selon la revendication 6, caractérisé en ce que l'on met à réagir le prépolymère de polyuréthanne pendant ou à la suite de la dispersion, en obtenant le polyuréthanne.

8. Procédé de revêtement d'objets en bois, papier, textile, métal où matière plastique, caractérisé en ce que
Ib. l'on applique un film des dispersions selon les revendications 1 à 5 sur les objets cités et
IIb. l'on expose à la lumière le film préparé dans l'étape Ib.

9. Procédé selon la revendication 8, caractérisé en ce que l'on sèche le film préparé selon l'étape Ib avant l'étape de procédé IIb.

10. Objets en bois, papier, textile, métal ou matière plastique, qui ont été revêtus en suivant le procédé selon la revendication 8 ou 9.

## Claims

1. An aqueous dispersion which contains less than 10% by weight, based on component (B), of protective colloids or emulsifiers, and comprises in dispersed form
A. a polyurethane (A) comprising hydrophilic groups, which bring about the water-dispersibility of the polyurethane, this polyurethane (A) being essentially free from C-C double bonds, and
B. a non self-dispersible prepolymer having a content of from 0.1 to 1 mol of free-radically polymerizable C-C double bonds per 100 g of prepolymer.

2. An aqueous dispersion as claimed in claim 1, where the weight ratio of polyurethane (A) to prepolymer (B) is from 0.3 : 1 to 99 : 1.

3. An aqueous dispersion as claimed in claim 1 or 2, where the polyurethane (A) is composed of
a) diisocyanates having 4 to 30 carbons,
b) diols of which
b1) from 10 to 100 mol-%, based on the overall amount of the diols (b), have a molecular weight of from 500 to 5000 and
b2) from 0 to 90 mol-%, based on the overall amount of the diols (b), have a molecular weight of from 60 to 500 g/mol,
c) monomers, other than the monomers (a) and (b), which have at least one isocyanate group or at least one group which is reactive toward isocyanate groups, and which additionally carry at least one hydrophilic group or a potentially hydrophilic group, so as to bring about the water-dispersibility of the polyurethanes,
d) if desired, further polyfunctional compounds, other than the monomers (a) to (c), which have reactive groups which are alcoholic hydroxyls, primary or secondary aminos or isocyanate groups, and
e) if desired, monofunctional compounds, other than the monomers (a) to (d), which have a reactive group which is an alcoholic hydroxyl, a primary or secondary amino or an isocyanate group.

4. An aqueous dispersion as claimed in claim 3, where the proportion of the monomers (a) among the monomers (a) to (e) is from 20 to 70% by weight.

5. An aqueous dispersion as claimed in any of claims 1 to 4, whose viscosity measured at 23 °C and at a shear rate of 250 s⁻¹, is from 10 to 1000 mPas.

6. A process for preparing an aqueous dispersion as claimed in any of claims 1 to 5, which comprises
Ia. preparing in step Ia a melt or solution containing the prepolymer (B) and the polyurethane (A) or its prepolymer,
IIa.dispersing the melt or solution, prepared in step Ia, in water.

7. A process as claimed in claim 6, wherein the polyurethane prepolymer is reacted during or after dispersion to form the polyurethane.

8. A method of coating articles of wood, paper, textile, metal or plastic, which comprises
Ib. applying a film of a dispersion as claimed in any of claims 1 to 5 to the articles mentioned, and
IIb.exposing the film produced in step Ib to light.

9. A method as claimed in claim 8, wherein the film produced in step Ib is dried before step IIb.

10. An article of wood, paper, textile, metal or plastic which has been coated by a method as claimed in claim 8 or 9.
